# FASCICULE DE BREVET EUROPEEN

(11) **EP 1 047 644 B1**
(45) Date de publication et mention de la délivrance du brevet: **22.01.2003**
(21) Numéro de dépôt: 99972196.2
(22) Date de dépôt: 10.11.1999
(51) Int. Cl.: C03C 17/36

(54) **VITRAGE MUNI D'UN EMPILEMENT DE COUCHES BAS-EMISSIF**
MIT EINEM SCHICHTSTAPEL NIEDRIGER EMISSIVITÄT VERSEHENE VERGLASUNG
GLAZING PROVIDED WITH A LOW EMISSIVE STACK OF LAYERS

(30) Priorité: 13.11.1998 DE 19852358
(43) Date de publication de la demande: 02.11.2000
(73) Titulaire: SAINT-GOBAIN GLASS FRANCE, 92400 Courbevoie (FR)
(72) Inventeur: SCHICHT, Heinz, D-06925 Bethau (DE); SCHMIDT, Uwe, D-04895 Falkenberg/Elster (DE); KAISER, Wilfried, D-04860 Torgau (DE); SCHINDLER, Herbert, D-04860 Torgau (DE)
(74) Mandataire: Le Cam, Stéphane Georges Elie
(86) Numéro de dépôt international: FR9902764
(87) Numéro de publication internationale: WO00029347

(56) Documents cités:
- EP-A- 0 751 099
- EP-A- 0 824 091
- EP-A- 0 877 005
- DD-A- 288 822
- DE-C- 19 732 978

## Description

L'invention concerne des empilements de couches minces à propriétés thermiques, notamment de contrôle solaire, bas-émissif, disposés sur des substrats transparents pour en faire des vitrages pour le bâtiment ou les véhicules. Il s'agit de substrats organiques du type polyacrylate, polyméthacrylate de méthyle, ou, préférentiellement, de substrats en verre. L'invention concerne plus particulièrement les empilements de couches aptes à supporter des traitements thermiques à température élevée, par exemple d'au moins 500 à 550°C qui sont utilisés pour traiter le verre en vue de le bomber, de le recuire et/ou de le tremper.

Les empilements concernés utilisent des couches fonctionnelles à base d'argent, entourées de revêtements en matériau diélectrique (notamment pour diminuer la réflexion lumineuse), avec éventuellement des couches métalliques dites " blocker " ou " sacrificielles " entre la couche fonctionnelle et l'un au moins des revêtements en diélectrique.

Les vitrages muni d'un empilement de couches bas-émissif permettent d'augmenter l'isolation thermique. Dans le cas de vitrages d'isolation, on peut presque complètement supprimer, grâce à l'utilisation de verres ayant une émissivité de ε ≤ 0,1, sur la face tournée vers la lame de gaz intermédiaire, l'échange radiatif entre les surfaces en verre. Il devient de ce fait possible de fabriquer des vitrages isolants ayant une valeur K de 1,1 W/m²K. Des vitrages ayant des empilements optimaux de couches bas-émissifs doivent, d'autre part, également présenter une transmission énergétique globale la plus élevée possible, c'est-à-dire une valeur g aussi élevée que possible, pour pouvoir utiliser l'énergie solaire dans le bilan énergétique. Sur le plan optique, la couleur de réflexion du vitrage doit être relativement neutre, proche de celles du vitrage isolant classique, et on cherche aussi à obtenir une transmission lumineuse la plus élevée possible.

Des empilements de couches, qui remplissent toutes au moins partiellement ces conditions, ont déjà été étudiées selon différentes variantes, et ont en principe la structure générale rappelée plus haut.

Dans l'ensemble de ce texte, on fera référence au substrat transparent sous le nom de verre, étant entendu que cela peut englober également les substrats en polymère organiques. Il ne s'agit que du verre au sens littéral quand un traitement thermique qu'il est seul apte à supporter (bombage, trempe vers 550-650°C) est mentionné.

De plus en plus, il est nécessaire de mettre au point des vitrages ayant des empilements de couches à faible émissivité de ce genre, qui peuvent être soumises à un traitement thermique de précontrainte, pour augmenter la résistance à la flexion des verres et pour conférer aux verres des propriétés de sécurité. Dans ce but, il faut chauffer les vitres en verre à une température de plus de 550 à 650°C, c'est-à-dire à leur température de ramollissement, et ensuite il faut les refroidir brutalement, quand il s'agit d'une trempe. On impose alors aux couches des sollicitations particulièrement élevées qui ne sont pas toujours supportées sans détérioration par les empilements bas-émissifs connus. En cas de sollicitation thermique, il se produit en particulier souvent des modifications de couche, qui proviennent notamment de phénomènes d'oxydation et/ou de diffusion à l'interface entre les différentes couches.

Une importance particulière revient, lors d'un traitement thermique de ce genre, aux deux couches métalliques sacrificielles adjacentes à la couche d'argent. Du document DE 19632788 A1, on connaît un empilement de couches approprié à des verres bombés et/ou précontraints (trempés), dans lequel les couches métalliques sacrificielles se composent au-dessus et au-dessous de la couche d'argent à chaque fois d'un alliage AlMgMn et présentent une épaisseur de 5 à 10 nm. Au moins une des couches anti-réflexion diélectriques peut étre formée de plusieurs oxydes différents des métaux Sn, Zn, Ti, Si ou Bi. Dans le cas de ce système de couches connu, on protège certes la couche d'argent contre la corrosion et la détérioration grâce aux deux couches d'agents bloqueurs spéciales aux températures élevées du traitement thermique, mais on ne parvient cependant pas à obtenir de façon satisfaisante simultanément une transmission lumineuse très élevée, une émissivité très faible et la neutralité de couleur souhaitée.

Le but de l'invention est de mettre au point un empilements de couches qui présente une transmission lumineuse globale élevée, une émissivité extrêmement faible et une couleur de réflexion neutre, et ceci même après avoir subi un traitement thermique modéré ou très élevé, notamment un traitement à plus de 550°C pour bomber /tremper ou recuire le verre porteur de l'empilement.

L'invention a pour objet un substrat transparent, notamment en verre, muni d'un empilement de couches à propriétés thermiques, notamment de contrôle solaire ou bas-émissif, notamment apte à subir les traitements thermiques mentionnés plus haut et qui comprend au moins une couche fonctionnelle à base d'argent entourée de deux revêtements en matériau diélectrique, avec la présence de couches (fines) métalliques entre la couche fonctionnelle et l'un au moins des deux revêtements. L'empilement de l'invention se caractérise par la séquence suivante :
D₁/ZnO/Ag/AlM/D₂/ZnM'O
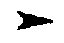 avec AlM un alliage à l'aluminium contenant au moins un des éléments suivants : Mg, Mn, Cu, Zn, Ni, Si,
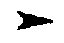 avec ZnM'O un oxyde mixte de zinc et d'un autre métal au moins, ayant de préférence une structure de spinelle,
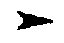 avec D₁ et D₂ une couche ou une superposition de couches comprenant au moins une couche en oxyde métallique comme SnO₂, Bi₂O₃, TiO₂, ZnO ou en nitrure de silicium ou de métal comme Si₃N₄ ou AIN ou en nitrure mixte de silicium et de métal comme SiAlN ou SiZrN.
(Au sens de l'invention, les formulations AlM, ZnM'O, SiAlN, SiZrN, ne préjugent pas de la stoechiométrie de chacun des éléments et ont été adoptées par souci de simplicité dans le texte. Il va de soi qu'il faut comprendre Al_{z}M_{y}, ZnₓM'_{y}O_{z}, etc...). On entend par couches "fines" des couches déposées sous forme essentiellement métalliques et d'épaisseur significativement plus faible que celle de la couche d'argent, de l'ordre de 0.5 à 5 nm par exemple, et qui sont susceptibles d'être partiellement oxydées/modifiées lors du dépôt ou lors d'un traitement thermique postérieur au dépôt. On les désigne souvent sous le terme de couches "sacrificielles" (au-dessus de l'argent) ou de couches "blocker" (au-dessus et/ou en dessous de l'argent).

Avantageusement, D₁ et/ou D₂ sont des couches unique, double ou triple. Il peut s'agir, dans un mode de réalisation préféré, d'une superposition de trois couches, dont une couche à bas indice de réfraction, inférieur à 1,75 et même à 1,65 (1.45 -1,63) comme SiO₂ et/ou Al_{z}O_{y} encadrée par deux couches d'indice de réfraction plus élevé, par exemple supérieur à 1,9 (2-2.5) comme les matériaux évoqués plus haut : Bi₂O₃, SnO₂, TiO₂, ZnO, Si₃N₄, AIN, SiAlN, SiZrN.

Avantageusement, l'alliage d'aluminium AlMe comprend de 45 à 99% en poids d'Al, et 55 à 1% en poids d'un ou plusieurs autres métaux ou assimilés comme le silicium. Il peut notamment s'agir d'un alliage ayant au moins 80% d'Al, notamment de 90 à 98% d'Al, de 2 à 3% de Zn et de 0 à 3% de Mg. Un exemple est un alliage comportant environ 94% d'Al, 5% de Zn et 1% de Mg.

De préférence, une couche métallique est insérée entre la couche de ZnO sous la couche d'argent et ladite couche d'argent. Elle est de préférence en Zn. Elle peut aussi être en d'autres métaux comme Sn, Ti, NiCr.

De préférence l'oxyde mixte de zinc ZnM'O est obtenu par pulvérisation cathodique réactive à partir d'une cible en alliage métallique contenant Zn, Sn et Al et/ou Sb, notamment selon les proportions en poids suivantes :
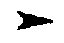 60 à 80% de Zn, notamment 68%,
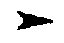 20 à 40% de Sn, notamment 30%,
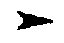 1 à 5% d'Al ou de Sb, notamment 2%.

Généralement, on peut considérer que ces proportions sont à peu de choses près conservées dans la couche d'oxyde mixte ainsi obtenue. Il est préférable que la proportion de Zn par rapport aux autres métaux dans la couche soit d'au moins 50%, et de préférence d'au plus 75 à 80%, ce qui permet de réaliser une structure spinelle. Avec une quantité trop importante en zinc, on risque de former des grains de ZnO et d'affecter la durabilité chimique de la couche; le troisième élément, Al ou Sb permettrait de " doper " les grains de ZnO et les rendre ainsi plus résistants à l'humidité. Le fait est que la couche de l'invention est particulièrement dure et sert ainsi de surcouche dure de protection vis-à-vis du reste de l'empilement.

L'invention propose trois modes de réalisation non limitatifs, sur verre notamment, d'empilements :
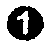 - SnO₂/ZnO/Zn/Ag/AlZnMg/SnO₂/ZnSnAlO
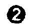 - SnO₂/ZnO/Zn/Ag/AlZnMg/SnO₂/SiO₂/SnO₂/ZnSnAlO
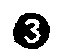 - SnO₂/ZnO/Zn/Ag/AlZnMg/SnO₂/Al₂O₃/SnO₂/ZnSnAlO
avec AlZnMg, ZnSnAlO ne préjugeant pas des proportions relatives entre les différents éléments de chacune des deux types de couches. A noter qu'on peut remplacer Al par Sb dans la couche en oxyde mixte de zinc.

L'invention a également pour objet le vitrage monolithique (un seul substrat rigide), feuilleté ou multiple incorporant le substrat revêtu décrit plus haut.

L'invention concerne donc un empilement de couches à structure de couches suivante :
Verre - MeO - ZnO - Zn - Ag - AlMe - MeO - ZnMeO, MeO étant un oxyde métallique comme SnO₂, Bi₂O₃, TiO₂ ou ZnO, AlMe étant un alliage d'aluminium ayant un ou plusieurs des éléments Mg, Mn, Cu, Zn et Si en tant que constituant d'alliage, et ZnMeO étant un oxyde composite, contenant du ZnO, du type spinelle.

Dans ces modes de réalisation, ce n'est que grâce à l'interaction des diverses couches, à savoir la couche métallique de Zn (optionnelle) en tant que couche métallique sacrificielle inférieure, l'alliage d'Al en tant que couche métallique sacrificielle supérieure, et une couche anti-réflexion supérieure avec une couche partielle en un oxyde mixte, contenant du ZnO avantageusement à structure de spinelle, que l'on réalise un empilement de couches susceptible de bombage/trempe, qui remplit toutes les exigences pour ce qui concerne l'émissivité extrêmement faible, la transmission lumineuse et la neutralité de couleur en réflexion, et qui peut être fabriqué, de surcroît, dans des installations de dépôt industrielles sans problème technologique, et d'une manière économique.

Il est certes connu, par exemple du document DE 19607611 Cl, que des empilements de couches, dans lesquels les couches anti-réflexion diélectriques se composent de ZnO, peuvent être soumis à des sollicitations thermiques élevées et sont appropriés pour la précontrainte du verre. La pulvérisation cathodique de ZnO pose souvent problème, lors du fonctionnement pratique dans la chambre de pulvérisation : il se forme plus de dépôts que pour d'autres oxydes métalliques, lesquels dépôts perturbent le processus de pulvérisation cathodique et conduisent à des couches défectueuses. Cet inconvénient est minimisé pour l'empilement de couches selon l'invention du fait que, pour la formation des couches antiréflexion, ZnO est utilisé dans une moindre mesure, pour la formation de couche partielle, alors que les autres couches partielles sont formées à partir d'autres oxydes, comme par exemple SnO₂, qui présentent un bien meilleur comportement lors du procédé de pulvérisation cathodique. (On utilise ici le terme "partielle" pour indiquer que le ZnO ne constitue pas toute l'épaisseur des revêtements en diélectrique de part et d'autre de la couche d'argent.)

On utilise de préférence, pour l'alliage d'aluminium formant la couche métallique sacrificielle supérieure, des alliages ayant une teneur en Al de 45 à 99 % en poids.

Une composition préférée de l'oxyde mixte de zinc de type spinelle selon l'invention comprend de 35 à 70% en poids de Zn, de 29 à 64,5% en poids de Sn et de 0,5 à 6,5% en poids d'au moins un des éléments suivants : Al, Ga, In, B, Y, La, Ge, Si, P, As, Sb, Bi, Ce, Ti, Zr, Nb, Ta.

Des perfectionnements avantageux seront ci-après détaillés à l'aide d'exemples de réalisation non limitatifs.

### Exemple de comparaison et exemple de réalisation

Il faut soumettre à une précontrainte thermique des verres pourvus d'un système de couches, les verres revêtus devant présenter, après la précontrainte, les mêmes propriétés optiques, que le système de couches verre - 25 nm de SnO₂ - 8 nm de ZnO - 13,3 nm d'Ag - 2 nm de CrNi - 44 nm de SnO₂ (exemple de comparaison), lorsqu'il n'est pas soumis à un traitement thermique consécutif. Les verres revêtus précontraints doivent en effet pouvoir être utilisés dans des façades à côté de verres revêtus avec le système de couches cité, l'émissivité et les propriétés optiques ne devant pas se différencier significativement les unes des autres en termes de transmission et de réflexion lumineuses.

Pour évaluer leurs propriétés, on effectue avec des verres flottés d'une épaisseur de 6 mm pourvus du système de couches de comparaison susnommé, les mesures suivantes :
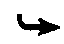 mesure de la transmission lumineuse T_{L} à 550 nm ;
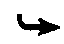 mesure des propriétés de couleurs en réflexion dans le système L, a*, b*
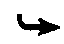 mesure de la résistance superficielle électrique et
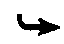 mesure de l'émissivité.

On dépose, sur un verre flotté non précontraint d'une épaisseur de 6 mm, l'empilement de couches connu précité, et on fait les mesures citées à trois endroits répartis sur la surface du verre. On obtient les valeurs moyennes suivantes :
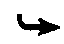 T₅₅₀ = 81,49 %
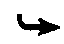 a* = 0,32
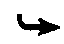 b* = - 7,81
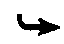 R = 4,44 Ω/□
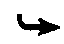 ε = 4,9%

Grâce à une augmentation de l'épaisseur de la couche métallique sacrificielle en CrNi de 2 nm à environ 5 nm, on peut modifier la structure de couches citée dans une telle mesure que le système de couches résiste à un échauffement à environ 680°C et à un traitement de précontrainte subséquent sans destruction de la couche d'argent. Avant le traitement thermique, la transmission lumineuse à cause de la couche métallique sacrificielle plus épaisse, n'est que d'environ T_{L} = 69 %.

Après le traitement thermique et le traitement de précontrainte, on mesure à nouveau les propriétés citées et on obtient en moyenne les valeurs suivantes :
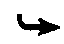 T₅₅₀ = 80,2 %
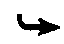 a* = +2,1
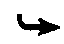 b* = - 4,98
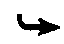 R = 3,4 Ω/□
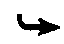 ε = 3,95%

La transmission lumineuse et les valeurs de couleur, en particulier la valeur a*, se situent au-delà des valeurs limite admissibles. Les verres manifestent de surcroît, en réflexion en lumière rasante, un voile rouge relativement fort.

### EXEMPLE DE REALISATION 1

Dans le cas de cet exemple de réalisation selon l'invention, on munit un verre flotté d'une épaisseur de 6 mm du système de couches suivant :
Verre - 25 nm de SnO₂ - 8 nm de ZnO - 4 nm de Zn - 13,5 nm d'Ag - 3 nm de AlZnMg - 40 nm de SnO₂ - 4 nm de ZnₓSn_{y}Al_{z}Oₙ :
   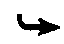 la cible qui est pulvérisée pour faire la couche sacrificielle en AlZnMg est à base d'un alliage comprenant 94% en poids d'Al, 6% en poids de Zn et 1% en poids de Mg ; la couche obtenue a une composition très proche de celle de la cible,
   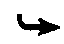 pour faire la couche mixte d'oxyde de zinc, on utilise une cible comprenant 68% de Zn, 30% de Sn et 2% d'Al en poids.

Les mesures effectuées avant un traitement thermique en trois endroits différents de la couche conduisent aux valeurs moyennes suivantes :
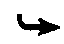 T₅₅₀ = 83,1 %
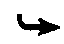 a* = - 0,4
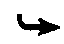 b* = - 7,2
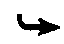 R =4,2 Ω/□
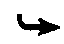 ε = 4,69%

Les valeurs mesurées se situent en deçà des valeurs limite prédéterminées : les verres avec cette structure de couches peuvent être disposés sans traitement thermique subséquent à coté de verres avec le système de couches de comparaison, sans qu'ils puissent être différenciés visuellement de ces derniers.

Quand les verres ayant ce système de couches doivent subir une précontrainte thermique, l'épaisseur de la couche métallique sacrificielle en AlZₙMg est à augmenter dans une mesure telle que la transmission du système de couches soit réduite à la valeur de 70% ; son épaisseur est alors d'environ 7 nm. La structure de couches reste pour le reste inchangée. Grâce à la couche métallique sacrificielle plus épaisse, les valeurs de couleur se modifient, pour une mesure à trois endroits différents, en moyenne comme suit :
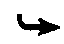 a* = 0,31
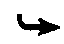 b* = - 12,37

Les verres pourvus de la couche métallique sacrificielle plus épaisse sont soumises au même traitement thermique et au même traitement de précontrainte que le système de couches de comparaison. On mesure ensuite à nouveau sur divers échantillons les propriétés citées. Les mesures indiquent en moyenne les valeurs suivantes :
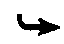 T₅₅₀ = 83,5%
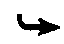 a* = - 0,4
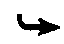 b* = -7,0
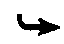 R =2,9 Ω/□
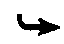 ε = 3.36 %

Après la précontrainte, les valeurs optiques se situent en deçà des valeurs limite prédéterminées. L'empilement de couches ne manifeste aucun défaut. En lumière rasante, aucun voile rouge n'est visible, même dans des conditions difficiles. La résistance superficielle électrique et l'émissivité sont extrêmement faibles.

### EXEMPLE DE REALISATION 2

Un verre flotté de 6 mm prévu pour être ensuite traité thermiquement est muni de l'empilement de couches suivant :
Verre - 20 nm de SnO₂ - 16 nm de ZnO - 4 nm de Zn - 13,5 nm d'Ag - 7 nm de AlZnMg - 25 nm de SnO₂ - 15 mm de SiO₂ - 8 nm de SnO₂ - 4 nm de ZnSnAlO :
   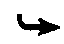 pour faire les couches en AlZnMg et en ZnSnAlO, on utilise les mêmes cibles qu'à l'exemple 1,
   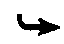 pour faire la couche en SiO₂, on utilise une cible en silicium contenant éventuellement un peu d'Al ou de Ni. Par exemple, la cible peut contenir de 6 à 10% en poids d'Al, ou de 6 à 9% en poids de Ni. Cet ajout favorise le procédé de pulvérisation, réalisé de préférence avec des cathodes rotatives.

Avant traitement thermique, les mesures de transmission lumineuse, a* et b* en trois points donnent les résultats suivants :
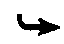 T₅₅₀ = 70%
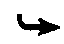 a* = +2,64
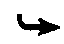 b* = -0,11
le verre revêtu est ensuite chauffé à sa température de ramollissement pour être bombé. Les mesures sont faites à nouveau en différents points, on obtient :
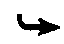 T₅₅₀ = 84,5%
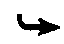 a* = -0,86
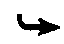 b* = -2,9
les valeurs de résistance de surface et d'émissivité sont pratiquement les mêmes que pour le premier exemple de réalisation. Les valeurs colorimétriques mesurées montrent que l'intensité de la couleur en réflexion est encore amoindrie, on a une encore plus grande neutralité de couleur en réflexion.

De façon générale, on peut considérer comme avantageux de régler l'épaisseur de la couche sacrificielle sous l'argent entre 1 et 6 nm, notamment entre 3 et 5 nm.

De la même manière, il est avantageux de choisir l'épaisseur de la couche sacrificielle sur l'argent à base d'alliage à l'aluminium d'au moins 1 ou 2 nm, notamment d'au moins 3 jusqu'à 10 nm.

En ce qui concerne la surcouche d'oxyde mixte, une gamme d'épaisseurs satisfaisante peut être d'au moins 2 nm, notamment de 3 à 8 nm, par exemple 3 à 6 nm.

## Revendications

1. Substrat transparent, notamment en verre, muni d'un empilement de couches à propriétés thermiques, notamment de contrôle solaire ou bas-émissif, notamment apte à subir des traitements thermiques à température élevée, l'empilement comprenant au moins une couche fonctionnelle à base d'argent entourée de deux revêtements en matériau diélectrique, avec la présence de couches fines métalliques entre la couche fonctionnelle et l'un au moins des revêtements en matériau diélectrique, ***caractérisé en ce que*** l'empilement comprend la séquence :
D₁/ZnO/Ag/AlM/D₂/ZnM'O
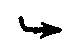 avec AIM un alliage à l'aluminium contenant au moins un des éléments suivants : Mg, Mn, Cu, Zn, Ni, Si,
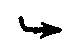 avec ZnM'O un oxyde mixte de zinc et d'un autre métal au moins, ayant de préférence une structure de spinelle,
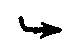 avec D₁ et D₂ une couche ou une superposition de couches comprenant au moins une couche en oxyde métallique comme SnO₂, Bi₂O₃, TiO₂, ZnO ou en nitrure de silicium et de métal ou en nitrure mixte de silicium et de métal comme Si₃N₄, AIN, SiAlN ou SiZrN.

2. Substrat selon la revendication 1, ***caractérisé en ce que*** D₁ et/ou D₂ est une superposition de trois couches, dont une couche à bas indice, inférieur à 1,75 comme SiO₂ et/ou Al₂O₃ encadrée par deux couches d'indice supérieur à 1,9 comme SnO₂, Bi₂O₃, TiO₂, ZnO, Si₃N₄, AlN, SiAlN ou SiZrN.

3. Substrat selon l'une des revendications précédentes, ***caractérisé en ce que*** l'alliage d'aluminium AlMe comprend de 45 à 99% en poids d'aluminium et de 55 à 1% en poids d'un ou plusieurs autres métaux ;

4. Substrat selon l'une des revendications précédentes, ***caractérisé en ce que*** l'alliage d'aluminium AlMe comprend plus de 80% d'aluminium, notamment de 90 à 98% d'aluminium, de 2 à 8% de zinc et de 0 à 3% de magnésium, par exemple environ 94% d'Al, 5% de Zn et 1 % de Mg.

5. Substrat selon l'une des revendications précédentes, ***caractérisé en ce qu***'une couche métallique est insérée entre la couche de ZnO sous la couche d'argent et ladite couche d'argent, notamment en Zn.

6. Substrat selon l'une des revendications précédentes, ***caractérisé en ce que*** l'oxyde mixte de zinc ZnM'O est obtenu par pulvérisation cathodique réactive à partir d'une cible en alliage métallique contenant Zn, Sn et Al et/ou Sb, notamment selon les proportions en poids suivantes : 60 à 80% de Zn, notamment environ 68%, 20 à 40% de Sn, notamment environ 30%, et 1 à 5% d'Al ou de Sb, notamment environ 2%.

7. Substrat selon l'une des revendications précédentes, ***caractérisé en ce que*** l'empilement présente la séquence de couches suivantes :
SnO₂/ZnO/Zn/Ag/AlZnMg/SnO₂/ZnSnAlO ou ZnSnSbO

8. Substrat selon l'une des revendications précédentes, ***caractérisé en ce que*** l'empilement présente la séquence de couches suivantes :
SnO₂/ZnO/Zn/Ag/AlZnMg/SnO₂/SiO₂/SnO₂/ZnSnAlO ou ZnSnSbO

9. Substrat selon l'une des revendications précédentes, ***caractérisé en ce que*** l'empilement présente la séquence de couches suivantes :
SnO₂/ZnO/Zn/Ag/AlZnMg/SnO₂/Al₂O₃/SnO₂/ZnSnAlO ou ZnSnSbO

10. Vitrage monolithique, feuilleté ou multiple incorporant le substrat revêtu selon l'une des revendications précédentes.

## Patentansprüche

1. Transparentes Substrat, insbesondere aus Glas, mit einem Schichtsystem mit thermischen Eigenschaften, insbesondere zur Solarreflexion oder niedrig emittierend, insbesondere geeignet für Wärmebehandlungen bei hohen Temperaturen, wobei das Schichtsystem mindestens eine Funktionsschicht auf Silberbasis zwischen zwei dielektrischen Beschichtungen umfasst, wobei dünne metallische Schichten zwischen der Funktionsschicht und mindestens einer der dielektrischen Beschichtungen angeordnet sind, **dadurch gekennzeichnet, dass** das Schichtsystem die Folge
D₁/ZnO/Ag/AIM/D₂/ZnM'O
umfasst, wobei
- AIM eine Legierung aus Aluminium mit mindestens einem der folgenden Elemente Mg, Mn, Cu, Zn, Ni, Si ist
- ZnM'O ein Mischoxid aus Zink und mindestens einem anderen Metall ist, vorzugsweise mit Spinell-Struktur,
- D₁ und D₂ eine Schicht oder ein Schichtstapel mit mindestens einer Schicht aus einem Metalloxid wie SnO₂, Bi₂O₃, TiO₂, ZnO oder aus Siliziumnitrid und Metallnitrid oder aus einem Siiizium-Metali-Mischnitrid besteht wie Si₃N₄, AIN, SiAIN oder SiZrN besteht.

2. Substrat nach Anspruch 1, **dadurch gekennzeichnet, dass** D₁ und/oder D₂ ein Schichtstapel aus drei Schichten ist, wovon eine Schicht mit niederem Brechungsindex unterhalb von 1,75 wie SiO₂ und/oder Al₂O₃ zwischen zwei Schichten mit einem Brechungsindex von mehr als 1,9 wie SnO₂, Bi₂O₃, TiO₂, ZnO, Si₃N₄, AlN, SiAIN oder SiZrN ist.

3. Substrat nach einem der vorstehenden Ansprüche, **dadurch gekennzeichnet, dass** die Aluminiumlegierung 45 bis 99 Gew.-% Al und 55 bis 1 Gew.-% eines oder mehrerer anderer Metalle enthält.

4. Schichtsystem nach einem der vorstehenden Ansprüche, **dadurch gekennzeichnet, dass** die AlM-Legierung mehr als 80 % Al, insbesondere 90 - 98 Gew.-% Al, von 2 bis 8 Gew.-% Zn und zwischen 0 und 3 Gew.-% Mg aufweist, z. B. 94 % Al, 5 % Zn und 1 % Mn.

5. Substrat nach einem der vorstehenden Ansprüche, **dadurch gekennzeichnet, dass** eine metallische Schicht, insbesondere aus Zn, zwischen der ZnO-Schicht unter der Silberschicht und der besagten Silberschicht eingebracht ist.

6. Substrat nach einem der vorstehenden Ansprüche, **dadurch gekennzeichnet, dass** das ZnO-haltige Mischoxid ZnM'O reaktiv durch Zerstäuben eines Targets aus einer Metallegierung der Zusammensetzung Zn, Sn und Al und/oder Sb, insbesondere mit den Gewichtsproportionen 60 - 80 %, vorzugsweise etwa 68 % Zn, 20 bis 40 %, vorzugsweise etwa 30 % Sn, und 1 bis 5 % Al oder Sb, vorzugsweise etwa 2 %, erzeugt wird.

7. Schichtsystem nach einem der vorstehenden Ansprüche, **dadurch gekennzeichnet, dass** das Schichtsystem folgende Schichtenfolge hat:
SnO₂/ZnO/Zn/Ag/AlZnMg/SnO₂/ZnSnAlO oder ZnSnSbO.

8. Substrat nach einem der vorstehenden Ansprüche, **dadurch gekennzeichnet, dass** das Schichtsystem folgende Schichtenfolge hat:
SnO₂/ZnO/Zn/Ag/AlZnMg/SnO₂/SiO₂/SnO₂/ZnSnAlO oder ZnSnSbO.

9. Substrat nach einem der vorstehenden Ansprüche, **dadurch gekennzeichnet, dass** das Schichtsystem folgende Schichtenfolge hat:
SnO₂/ZnO/Zn/Ag/AlZnMg/SnO₂/Al₂O₃/SnO₂/ZnSnAlO oder ZnSnSbO.

10. Monolithische, Verbund- oder Mehrfachscheibe mit einem Schichtsystem nach einem der vorstehenden Ansprüche.

## Claims

1. Transparent substrate, particularly of glass, provided with a stack of coatings having thermal properties, particularly solar control or low-emissive properties, which can undergo heat treatments at high temperatures, the stack containing at least one functional coating based on silver surrounded by two dielectric material layers, with thin metal coatings between the functional coating and at least one of the dielectric material layers, **characterized in that** the stack comprises the sequence:
D₁/ZnO/Ag/AlM/D₂/ZnM'O
with AlM being an aluminium alloy containing at least one of the following elements: Mg, Mn, Cu, Zn, Ni, Si,
with ZnM'O a mixed oxide of zinc and at least one other metal, preferably having a spinel structure,
with D₁ and D₂ a coating or a superimposing of coatings comprising at least one coating of metal oxide such as SnO₂, Bi₂O₃, TiO₂, ZnO or silicon nitride and metal or mixed metal and silicon nitride such as Si₃N₄, AlN, SiAlN or SiZrN.

2. Substrate according to claim 1, **characterized in that** D₁ and/or D₂ is a superimposing of three coatings, including a low index coating, below 1.75 such as SiO₂ and/or Al₂O₃ framed by two coatings with an index above 1.9 such as SnO₂, Bi₂O₃, TiO₂, ZnO, Si₃N₄, AlN, SiAlN or SiZrN.

3. Substrate according to one of the preceding claims, **characterized in that** the aluminium alloy AlMe comprises 45 to 99 wt.% aluminium and 55 to 1 wt.% of one or more other metals.

4. Substrate according to one of the preceding claims, **characterized in that** the aluminium alloy AlMe comprises more than 80% aluminium, particularly 90 to 98% aluminium, 2 to 8% zinc and 0 to 3% magnesium, e.g. approximately 94% Al, 5% Zn and 1% Mg.

5. Substrate according to any one of the preceding claims, **characterized in that** a metal coating is inserted between the ZnO coating beneath the silver coating and said silver coating, particularly of Zn.

6. Substrate according to one of the preceding claims, **characterized in that** the mixed zinc oxide ZnM'O is obtained by reactive cathodic sputtering from a metal alloy target containing Zn, Sn and Al and/or Sb, particularly with the following proportions by weight: 60 to 80% Zn, particularly approximately 68%, 20 to 40% Sn, particularly approximately 30%, and 1 to 5% Al or Sb, particularly approximately 2%.

7. Substrate according to one of the preceding claims, **characterized in that** the stack has the following sequence of coatings:
SnO₂/ZnO/Zn/Ag/AlZnMg/SnO₂/ZnSnAlO or ZnSnSbO.

8. Substrate according to any one of the preceding claims, **characterized in that** the stack has the following sequence of coatings:
SnO₂/ZnO/Zn/Ag/AlZnMg/SnO₂/SiO₂/SnO₂/ZnSnAlO or ZnSnSbO.

9. Substrate according to any one of the preceding claims, **characterized in that** the stack has the following sequence of coatings:
SnO₂/ZnO/Zn/Ag/AlZnMg/SnO₂/Al₂O₃/SnO₂/ZnSnAlO or ZnSnSbO.

10. Monolithic, laminated or multiple glazing incorporating the coated substrate according to any one of the preceding claims.
